# FASCICULE DE BREVET EUROPEEN

(11) **EP 0 777 278 B1**
(45) Date de publication et mention de la délivrance du brevet: **02.08.2000**
(21) Numéro de dépôt: 96402592.8
(22) Date de dépôt: 29.11.1996
(51) Int. Cl.: H01L 41/09

(54) **Moteur à vibrations à interface rotor/stator à alliage à mémoire de forme**
Vibrationsangetriebener Motor mit Rotor/Stator-Zwischenschicht aus Formgedächtnislegierung
Vibration driven motor with shape memory alloy for the rotor/stator interface

(30) Priorité: 30.11.1995 FR 9514169
(43) Date de publication de la demande: 04.06.1997
(73) Titulaire: SFIM INDUSTRIES, 91300 Massy (FR)
(72) Inventeur: Audren, Jean Thierry, 78470 St. Remy les Chevreuse (FR)
(74) Mandataire: Schrimpf, Robert

(56) Documents cités:
- EP-A- 0 612 115
- PATENT ABSTRACTS OF JAPAN vol. 013, no. 168 (E-747), 21 Avril 1989 & JP 64 001483 A (INOUE JAPAX RES INC), 5 Janvier 1989,

## Description

La présente invention est relative aux moteurs à vibrations.

Les moteurs à vibrations sont également connus sous d'autres noms tels que moteurs ultrasonores pour faire référence à leur fréquence préférée d'utilisation ou moteurs piézoactifs pour faire référence à leur matériau d'excitation préféré.

Les moteurs à vibrations comportent classiquement une interface de contact rotor-stator qui est le siège de phénomènes permettant l'entraînement du rotor par rapport au stator.

Ils fonctionnent sur le principe de la combinaison d'une déformation cyclique du stator tangente à la surface de contact avec une force normale cyclique synchrone. Ces déformations et forces cycliques sont obtenues par le biais d'un matériau actif piézoélectrique, magnétostrictif ou électrostrictif. La combinaison de la déformation tangentielle et de la force normale crée par frottement une force moyenne non nulle permettant l'entraînement du rotor selon un mouvement continu de direction constante.

Un tel moteur est connu du document EP-A-0 612 115, par exemple.

Les moteurs à vibrations ne délivrent aujourd'hui que des puissances mécaniques limitées à quelques dizaines de watts. Toutefois, ils présentent souvent déjà des densités massiques de puissance bien meilleures que celles des motoréducteurs classiques.

On peut également remarquer qu'ils travaillent généralement autour de points de fonctionnement qui chargent peu les céramiques des rotors et stators vis-à-vis de leur possibilité : 1 à 2 Mpa par rapport à des limites de charge de l'ordre de 50 Mpa. L'augmentation de la charge de ces céramiques permettrait d'augmenter le couple du moteur, sans augmenter la masse de celui-ci. Elle permettrait par conséquent d'atteindre des puissances de fonctionnement accrues pour des densités massiques de puissance encore plus importantes.

Toutefois, l'augmentation de la puissance utile va se traduire dans les conceptions actuelles par une augmentation de la dissipation énergétique à l'interface de friction entre le rotor et le stator.

C'est ce qui a été illustré sur les figures la à lc, sur lesquelles on a représenté le cycle de fonctionnement d'un moteur piézoactif actuel.

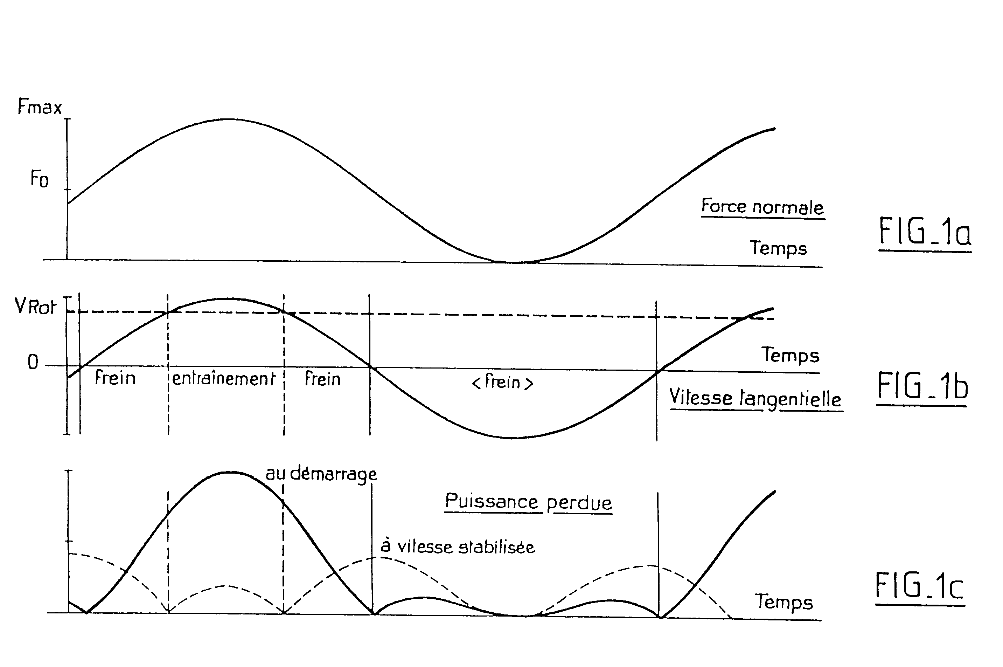

Plus particulièrement, sur la figure 1a, on a porté un cycle de la force normale réciproque à laquelle sont soumises les zones de friction du rotor et stator.

Cette force est présentée sous forme sinusoïdale car la plupart de ces moteurs travaillent sur la base de mouvements sinusoïdaux pour améliorer leur fonctionnement grâce aux résonnances. Bien entendu, d'autres types d'excitation sont possibles. Cependant, pour simplifier la présentation, on s'est placé dans le cas le plus courant de vibrations sinusoïdales.

La vitesse tangentielle Vₛₜₐₜ des zones de contact du stator est présentée sur la figure 1b.

On a également porté sur cette figure 1b la vitesse de rotation V_{Rot} du rotor en régime permanent.

Il y a entraînement du rotor lorsque la vitesse tangentielle des zones de friction du stator est égale ou supérieure à la vitesse du rotor.

La puissance perdue par frottement lors d'un tel cycle a été illustrée sur la figure 1c pour deux points de fonctionnement du moteur, au démarrage en trait plein et à la vitesse V_{Rot} en traits pointillés.

Au démarrage, c'est-à-dire pour V_{Rot} = 0, elle est moindre, mais non négligeable, pendant la période du cycle où les zones de friction du stator présentent une vitesse négative, c'est à dire lorsqu'elles retournent à leur position initiale après avoir entraîné le rotor.

A vitesse stabilisée, c'est-à-dire pour V_{Rot} > 0, la puissance perdue diminue pendant l'entraînement, alors qu'elle augmente pendant la période de retour des zones d'entraînement.

Un but de l'invention est de proposer un moteur piézoactif dans lequel les dissipations énergétiques liées aux frottements cycliques sont supprimées, ou à tout le moins très fortement diminuées.

Il est notamment possible, avec une telle structure de moteur de développer, à densité massique équivalente, des couples de fonctionnement très supérieurs à ceux des moteurs à vibrations de l'art antérieur.

A cet effet, l'invention propose un moteur à vibrations comportant un stator et un rotor, ainsi que des moyens d'excitation pour déformer ledit stator selon un mode vibratoire destiné à lui permettre d'entraîner en rotation le rotor, caractérisé en ce que le stator et/ou le rotor comporte(nt) au moins une zone en un alliage à mémoire de forme au niveau ou à proximité immédiate d'au moins une de leur zone de contact réciproque.

En particulier, avantageusement, les moyens d'excitation sont commandés de façon que pour chaque cycle élémentaire, le rotor et le stator soient en appui réciproque sans glissement au niveau de ladite zone de contact sur une première partie du cycle, et sans appui réciproque sur l'autre partie du cycle.

D'autres caractéristiques et avantages de l'invention ressortiront encore de la description qui suit. Cette description est purement illustrative et non limitative. Elle doit être lue en regard des dessins annexés sur lesquels :
- les figures 1a à 1c, déjà discutées, sont des graphes illustrant le fonctionnement d'un moteur piézoactif de l'art antérieur ;
- la figure 2 est une représentation schématique en coupe d'une structure possible pour un moteur piézoactif proposé par l'invention ;
- la figure 3 est un graphe sur lequel on a porté les courbes d'hystérésis contrainte/déformation d'un alliage à mémoire de forme ;
- la figure 4 est une représentation schématique en coupe d'une zone d'interface entre le stator et le rotor du moteur de la figure 2 ;
- les figures 5a et 5b sont des graphes semblables à ceux des figures 1a et 1b pour un moteur piézoactif conforme à l'invention ;
- la figure 5c est un graphe représentant le couple de ce moteur, pour le cycle des figures 5a et 5b.

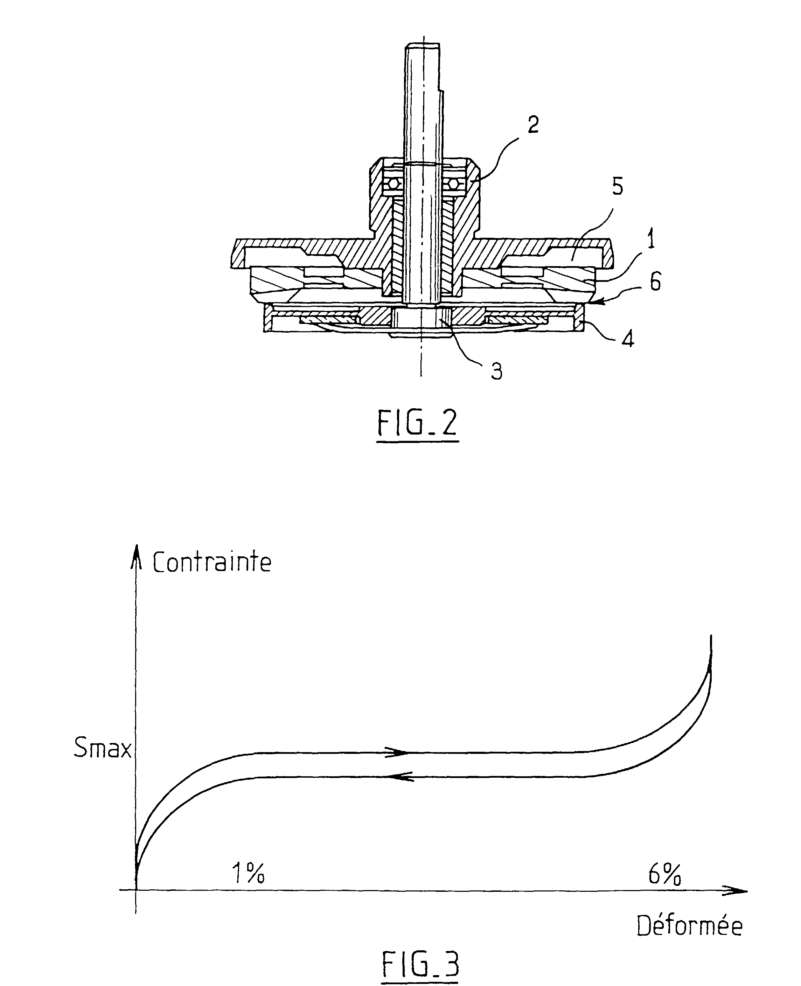

Le moteur à vibrations illustré sur la figure 2 est un moteur piézoactif de type ultrasonore.

Il comporte un stator 1 monté sur un corps 2, ainsi qu'un rotor 4 monté sur un axe 3 qui traverse le stator et le corps 2, ce rotor 4 étant entraîné par frottement par les déformations du stator 1.

La face du stator 1 opposée au rotor 4 porte une pluralité d'éléments 5 en céramique piézoélectrique répartis en anneau sur le stator 1 et destinés à déformer celui-ci, de façon à ce qu'il entraîne le rotor 4. Cet anneau 5 est excité en régime harmonique par une tension électrique sinusoïdale.

Les différentes zones de contact entre le stator 1 et le rotor 4 comportent un alliage à mémoire de forme.

Pour une présentation générale des alliages à mémoire de forme, on pourra avantageusement se référer à l'ouvrage :
E. Patoor, M. Berveiler - "Technologie des alliages à mémoire de forme" - Traité des Nouvelles Technologies-HERMES - 1994.

Les alliages à mémoire de forme ont en particulier la caractéristique d'être superélastique jusqu'à des températures très basses. Un exemple de courbes contrainte/déformation d'un tel alliage est donné à la figure 3. Comme on peut le voir sur cette figure, un tel alliage présente une plage superélastique importante pendant laquelle il se déforme à contrainte sensiblement constante.

Par exemple, le moteur présente, au niveau des zones d'interface du stator 1 et/ou du rotor 4 une couche de quelques millimètres d'épaisseur en un alliage Cu-Zn-Al.

Cette couche 6 est par exemple une couche de contact. Elle peut bien entendu également être intégrée à un empilement et par exemple être protégée par un patin de contact en une céramique résistante.

Préférentiellement toutefois, les zones en alliage de forme - dans lesquelles les déformations et contraintes sont localisées - sont de faible dimension (de quelques µm) de façon d'une part à amplifier les contraintes en les concentrant dans des zones de faible volume et d'autre part à permettre un fonctionnement de l'alliage en régime isotherme pour les fréquences de cycle classiquement utilisées pour les moteurs piézoactifs (plusieurs dizaines de KHz).

En ce qui concerne ce deuxième point, on notera en particulier que la constante de temps thermique des zones en alliage de forme est fonction de leur dimensionnement, et notamment est, à facteur de forme constant, proportionnelle à la taille desdites zones. Or, si la constante de temps thermique est supérieure à la période du cycle du moteur, les zones en alliage de forme se déforment selon un régime adiabatique ; leur échauffement a pour effet d'augmenter la valeur du plateau prolongeant la zone d'élasticité classique et de faire disparaître leur superélasticité.

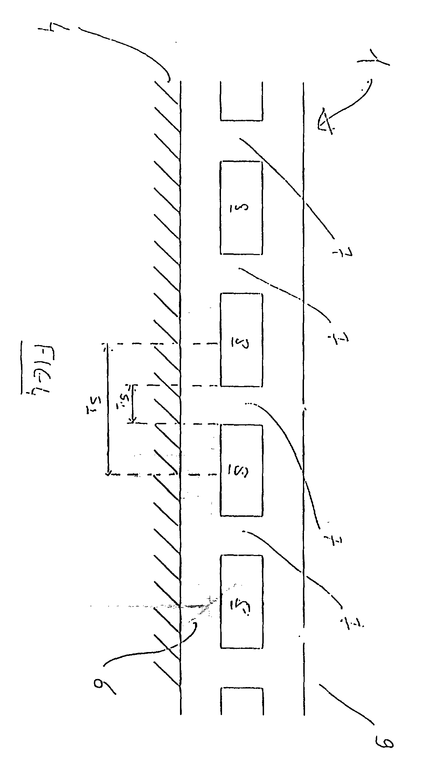

A titre d'exemple, on a représenté sur la figure 4 une structure possible à l'interface entre le stator 1 et le rotor 4.

A cet interface, le stator 1 présente une couche de contact 6, qui se prolonge par un champ d'éléments en alliage à mémoire de forme (plots 7).

Une telle structure est particulièrement avantageuse, puisqu'elle permet d'amplifier dans le matériau à mémoire de forme les contraintes tangentielles ou normales de la couche de contact 6.

Le rapport d'amplification est approximativement de l'ordre de S₁/S₂, où S₁ est la surface d'un plot 7 et S₂ la surface de la couche de contact 6 rapportée au nombre de plots 7.

La couche de contact 6 est avantageusement elle aussi en alliage de forme.

Dans l'exemple illustré sur la figure 4, les plots 7 et la couche de contact sont d'une pièce, les plots 7 étant définis par des évidements 8 ménagés à l'intérieur d'une couche 9 en alliage à mémoire de forme.

En variante, les plots 7 pourraient être soudés entre deux couches en matériaux en alliage de forme.

Ces plots 7 sont par exemple de section circulaire.

Les épaisseurs des plots 7 et de la couche 9 sont de l'ordre de quelques µm.

On notera en outre, qu'en jouant sur le rapport entre la largeur et/ou la hauteur des plots 7 et de la couche 6, il est possible d'ajuster les valeurs des plateaux de contrainte en compression (normale) et en cisaillement (tangentielle).

D'autres structures que celle illustrée sur la figure 4 sont bien entendu possibles.

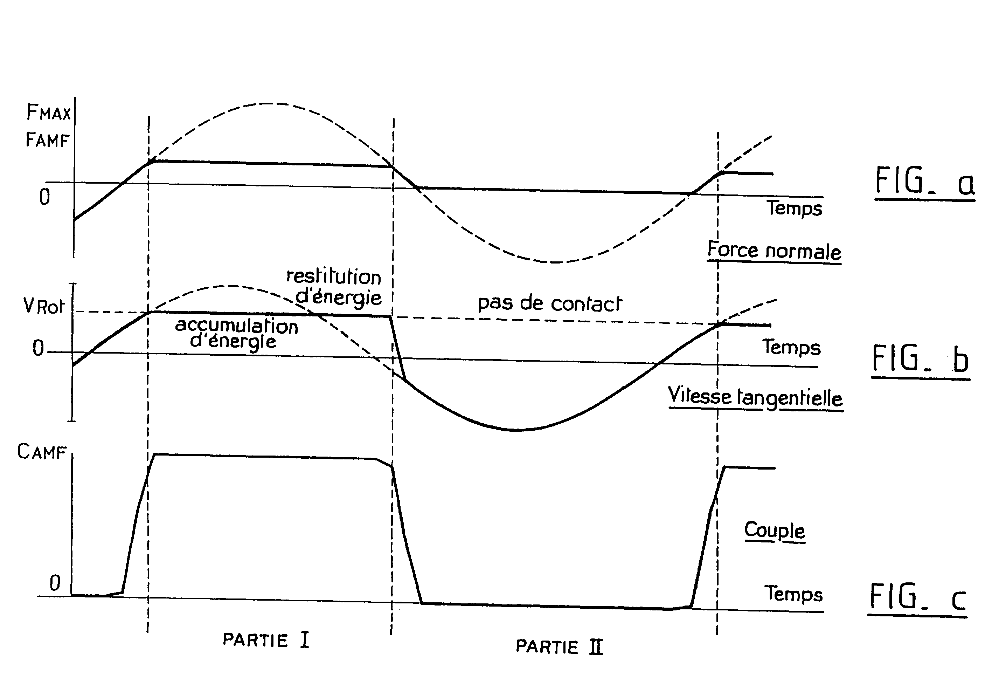

Les interfaces à alliage à mémoire de forme proposées par l'invention permettent un fonctionnement avec des cycles de contrainte et de vitesse tels qu'illustrés sur les figures 5a et 5b.

La courbe sinusoïdale représentée sur la figure 5a est la courbe de la déformation imposée au stator 1 par les éléments piézoélectriques 5.

Pour une interface donnée, pendant la partie du cycle où le stator 1 et le rotor 4 sont en contact (partie I), leur force normale d'appui réciproque est écrêtée par la valeur de contrainte seuil de l'alliage à mémoire (figure 5a).

La force tangentielle de frottement - qui est proportionnelle à la force normale d'appui entre le stator 1 et le rotor 4 - est alors également constante et reste inférieure au seuil de glissement, de sorte que la zone de contact du stator 1 a alors une vitesse tangentielle égale à celle du rotor 4 (figure 5b).

En outre, les éléments piézoélectriques 5 sont commandés de façon que la déformation imposée au stator 1 soit telle que sur la seconde partie du cycle (partie II), le stator 1 et le rotor 4 ne sont pas en contact, la force d'appui réciproque entre le stator 1 et le rotor 4 étant alors nulle (figure 5a).

Avec un tel fonctionnement, les pertes énergétiques dues aux frottements entre le stator 1 et le rotor 4 sont négligeables.

Elles sont nulles pendant la partie du cycle où le stator 1 et le rotor 4 sont en contact sans glissement, l'interface 6 en alliage à mémoire de forme accumulant l'énergie de déformation à contrainte constante lorsque la vitesse de la vibration est supérieure à celle du rotor, puis la restituant (figure 5b), lorsque la vitesse de la vibration diminue pour être inférieure à la vitesse du rotor.

Elles sont également nulles pendant l'autre partie du cycle, puisque le stator 1 et le rotor 4 ne sont alors pas en contact.

Etant donné que ces pertes énergétiques sont réduites, la charge des céramiques du moteur peut être plus importante que dans le cas de moteurs piézoactifs dépourvus d'éléments à mémoire de forme, ce qui permet d'envisager des amplitudes de couple plus importantes.

On notera en outre, ainsi qu'illustré sur la figure 5c, qu'avec un moteur du type de celui qui vient d'être décrit, le stator 1 entraîne le rotor 4 avec un couple qui est sensiblement constant sur toute la phase d'un cycle élémentaire pendant laquelle le stator 1 et le rotor 4 sont en contact.

## Revendications

1. Moteur à vibrations comportant un stator (1) et un rotor (4), ainsi que des moyens d'excitation pour déformer ledit stator (1) selon un mode vibratoire destiné à lui permettre d'entraîner en rotation le rotor (4), caractérisé en ce que le stator (1) et/ou le rotor (4) comporte(nt) au moins une zone (7) en un alliage à mémoire de forme au niveau ou à proximité immédiate d'au moins une de leur zone de contact réciproque.

2. Moteur selon la revendication 1, caractérisé en ce que le rotor (4) et/ou le stator (1) comporte(nt), au niveau ou à proximité de ladite zone de contact réciproque, une couche (6) en un alliage à mémoire de forme.

3. Moteur selon la revendication 1, caractérisé en ce que le rotor et/ou le stator comporte(nt) un champ d'éléments (7) en un alliage de forme superposés à une couche de contact (6).

4. Moteur selon la revendication 3, caractérisé en ce que la couche de contact est également en alliage à mémoire de forme.

5. Moteur selon la revendication 4, caractérisé en ce que les éléments (7) en alliage de forme et la couche de contact (6) sont d'une pièce, les éléments (7) étant définis par des évidements (8) ménagés à l'intérieur d'une couche (9) en alliage à mémoire de forme.

6. Moteur selon l'une des revendications précédentes, caractérisé en ce que les moyens d'excitation sont commandés de façon que pour chaque cycle élémentaire, le rotor (4) et le stator (1) soient en appui réciproque sans glissement au niveau de ladite zone de contact sur une première partie du cycle, et sans appui réciproque sur l'autre partie du cycle.

## Patentansprüche

1. Vibrationsmotor mit einem Stator (1) und einem Rotor (4) sowie Erregungseinrichtungen zum Verformen des besagten Stators (1) in einer bestimmten Schwingungsmode, damit er den Rotor (4) drehen kann, dadurch gekennzeichnet, daß der Stator (1) und/oder der Rotor (4) wenigstens einen Bereich (7) aus einer Formspeicherlegierung auf der Höhe oder in der unmittelbaren Nähe wenigstens eines ihrer wechselseitigen Kontaktbereiche umfaßt/umfassen.

2. Motor nach Anspruch 1, dadurch gekennzeichnet, daß der Rotor (4) oder der Stator (1) auf der Höhe oder in der Nähe des besagten wechselseitigen Kontaktbereiches eine Schicht (6) aus einer Formspeicherlegierung umfaßt/umfassen.

3. Motor nach Anspruch 1, dadurch gekennzeichnet, daß der Rotor und/oder der Stator ein Elementenfeld (7) aus einer Formspeicherlegierung umfaßt/umfassen, das einer Kontaktschicht (6) überlagert ist.

4. Motor nach Anspruch 3, dadurch gekennzeichnet, daß die Kontaktschicht ebenfalls aus einer Formspeicherlegierung besteht.

5. Motor nach Anspruch 4, dadurch gekennzeichnet, daß die Elemente (7) aus einer Formlegierung und die Kontaktschicht (6) in einem Stück ausgebildet sind, wobei die Elemente (7) von Aussparungen (8) begrenzt sind, die zum Inneren einer Schicht (9) aus einer Formspeicherlegierung ausgespart sind.

6. Motor nach einem der vorhergehenden Ansprüche, dadurch gekennzeichnet, daß die Erregungseinrichtungen so angesteuert werden, daß für jeden Grundzyklus der Rotor (4) und der Stator (1) wechselseitig ohne Gleiten auf der Höhe des besagten Kontaktbereiches während eines ersten Teils des Zyklus zur Anlage kommen und ohne wechselseitige Anlage während des anderen Teils des Zyklus sind.

## Claims

1. A vibration motor comprising a stator (1) and a rotor (4) together with excitation means for deforming said stator (1) in a vibratory mode enabling it to rotate the rotor (4), the motor being characterized in that the stator (1) and/or the rotor (4) include(s) at least one zone (7) of shape memory alloy at or in the immediate vicinity of at least one zone of mutual contact between the rotor (4) and the stator (1).

2. A motor according to claim 1, characterized in that the rotor (4) and/or the stator (1) include(s) a layer (6) of shape memory alloy in the vicinity of or at said zone of mutual contact.

3. A motor according to claim 1, characterized in that the rotor and/or the stator include(s) an array of elements (7) of shape memory alloy superposed on a contact layer (6).

4. A motor according to claim 3, characterized in that the contact layer is also of shape memory alloy.

5. A motor according to claim 4, characterized in that the shape memory alloy elements (7) and the contact layer (6) are a single piece, the elements (7) being defined between recesses (8) disposed inside a layer (9) of shape memory alloy.

6. A motor according to any preceding claim, characterized in that the excitation means are controlled in such a manner that during each cycle, the rotor (4) and the stator (1) press against each other without slip in said contact zone during a first portion of the cycle, and do not press against each other during the other portion of the cycle.
